Europäisches Patentamt

European Patent Office

Office européen des brevets

(11) Veröffentlichungsnummer: **0 515 948 A2**

## EUROPÄISCHE PATENTANMELDUNG

(21) Anmeldenummer: **92108395.2**

(22) Anmeldetag: **19.05.92**

(51) Int. Cl.⁵: **C08G 64/40**

(30) Priorität: **30.05.91 DE 4117751**

(43) Veröffentlichungstag der Anmeldung:
**02.12.92 Patentblatt 92/49**

(84) Benannte Vertragsstaaten:
**BE DE ES FR GB IT**

(71) Anmelder: **BAYER AG**

**W-5090 Leverkusen 1 Bayerwerk(DE)**

(72) Erfinder: **Weymans, Günther, Dr.**
**Körnerstrasse 5**
**W-5090 Leverkusen(DE)**
Erfinder: **Kirsch, Jürgen, Dr.**
**Völkinger Strasse 20**
**W-5090 Leverkusen(DE)**
Erfinder: **Herrig, Wolfgang, Dr.**
**Rommerscheiderstrasse 43**
**W-5060 Bergisch Gladbach 2(DE)**
Erfinder: **Paul, Hanns-Ingolf**
**Hahnenweg 3**
**W-5000 Köln 80(DE)**
Erfinder: **Treckmann, Rolf, Dipl.-Ing.**
**Buschfeldstrasse 2**
**W-5000 Köln 80(DE)**

(54) **Verfahren zur Isolierung von Polycarbonaten.**

(57) Gemäß vorliegender Erfindung wird Polycarbonat aus Methylenchlorid bei Temperaturen zwischen 30 und 80°C als Pulver mit Restlösungsmittelgehalten unter 5 Gew.-% dadurch isoliert, daß man in eine 10 bis 40 Gew.-%ige Polycarbonat-Lösung zunächst überwiegend Kohlendioxid-haltiges Fluid bei Drükken knapp unterhalb des Gelierpunktes des Fluid-Polycarbonat-Methylenchlorid-Systems einmischt und nach einer Verweilzeit von mindestens 1/10tel Sekunde dann soviel Kohlendioxid-haltiges Fluid in einer Düse nachdosiert, daß Polycarbonat unter raschem Durchschreiten des Gelierbereiches ausfällt.

EP 0 515 948 A2

In der deutschen Patentanmeldung P 4 040 855.8 (Le A 27 877) ist ein Verfahren zur Isolierung von Polymeren aus ihren Lösungsmitteln beschrieben durch Zugabe Kohlendioxid-haltiger Fluide bei Temperaturen von 30°C bis 280°C und Drücken von 1 bar bis 1 000 bar, das dadurch gekennzeichnet ist, daß die Konzentration der Polymeren in ihren Lösungsmitteln jeweils zwischen 5 Gew.-% und 80 Gew.-% beträgt und das Kohlendioxid-haltige Fluid aus mindestens 50 Gew.-% Kohlendioxid besteht.

Gegenüber anderen Versuchen zur Isolierung von Polymeren aus ihren Lösungsmitteln, wie sie beispielsweise in den Patentschriften US 4 634 761, EP 334 314 A2, DE 3 840 293 A1, JP 0 116 830-A2 und der Publikation "Yamamoto Koji" et al: Kagaku Kogaku Ronbunshu 15(3), Jahrgang 1989, Seiten 673-675" beschrieben sind, hat das dort beschriebene Verfahren den Vorteil, bei geringer Temperaturbelastung des Produktes schnell und einfach große Mengen Lösungsmittel zu entfernen.

Es wurde nun gefunden, daß sich unter Anwendung einer speziellen Maßnahme für Polycarbonate das in der deutschen Patentanmeldung P 4 040 855.8 (Le A 27 877) beschriebene Isolierverfahren hinsichtlich der Pulverform verbessern läßt.

Gegenstand der vorliegenden Erfindung ist daher ein kontinuierliches Verfahren zur Isolierung von Polycarbonaten aus Methylenchlorid bei Temperaturen zwischen 30 und 80°C als Pulver mit Restlösungsmittelgehalten unter 5 Gew.-%, dadurch gekennzeichnet, daß man

a) ausgehend von einer Polycarbonat-Methylenchlorid-Lösung, die 10 bis 40 Gew.-% Polycarbonat, bezogen auf das Gesamtgewicht der Polycarbonat-Lösung, enthält,

b) zunächst Kohlendioxid-haltiges Fluid so einmischt, daß das System Polycarbonat-Methylenchlorid-Kohlendioxid noch nicht geliert, üblicherweise bei Drücken zwischen 10 und 50 bar und Temperaturen zwischen 30 und 50°C, so daß 10 bis 12 % $CO_2$ gelöst sind,

c) anschließend die unter Druck stehende Lösung, die Polycarbonat, Methylenchlorid und Kohlendioxid-haltiges Fluid enthält, in einer Zweistoffdüse mit weiterem Kohlendioxid-haltigen Fluid unter Druck zwischen 50 und 300 bar, bevorzugt zwischen 70 und 200 bar bei Temperaturen zwischen 40 und 150°C, bevorzugt 80 und 120°C, zusammenbringt, wobei das Massenverhältnis $CO_2$/Lösung schließlich zwischen 1,0 und 15, vorzugsweise zwischen 2,5 und 8,0, liegt,

d) wobei zwischen der Maßnahme b) und c) eine Verweilzeit von mindestens 0,1 Sekunden realisiert wird und

e) die Dosierung von Kohlendioxid-haltigem Fluid generell so gesteuert wird, daß in der Maßnahme b) wegen der thermischen Bedingungen Polycarbonat noch nicht geliert und in der Maßnahme c) wegen der hinreichenden Übersättigung das System Polycarbonat:Methylenchlorid:Kohlendioxid oberhalb des Gelierbereiches ist und Polycarbonat rasch als Festpartikel aus dem Dreiphasensystem ausfällt, wobei die Steuerung über die thermischen Bedingungen, nämlich Druck und Temperatur, sowie über die Verweilzeit erfolgt, wovon der Druck die entscheidende Steuergröße ist,

f) wobei gegebenenfalls Methylenchlorid und Kohlendioxid-Gase in einem Verdichter/Kondensatorsystem im wesentlichen getrennt und Kohlendioxid in den Destraktionsprozeß zurückgeführt wird.

Das System Polycarbonat-Methylenchlorid-Kohlendioxid geliert dann nicht, wenn man es stets unter der kritischen Übersättigung hält. Es geliert beispielsweise dann nicht, wenn die Temperatur >30°C ist, der Druck <40 bar ist oder der $CO_2$-Gehalt <8 Gew.-% ist. Je näher das System an die kritische Übersättigung herangeführt wird, umso kürzer muß die Verweilzeit sein, beispielsweise bei 48°C und 50 bar höchstens 35 Minuten.

Geeignete Kohlendioxid-haltige Fluide sind solche Fluide, die zu wenigstens 20 Gew.-%, bevorzugt wenigstens 50 Gew.-%, besonders bevorzugt zu wenigstens 80 Gew.-%, bezogen auf das Gesamtgewicht der Fluidmasse, reines Kohlendioxid enthalten. Andere Gase sind beispielsweise $N_2$, $CH_4$, Edelgase oder Schwefelhexafluorid, wobei als Schleppmittel $C_1$-$C_{10}$-Alkohole, Ketone oder n-Alkane dienen können. Bevorzugte Kohlendioxid-haltige Fluide sind auch solche, die Verunreinigungen von Methylenchlorid enthalten. Wenigstens 20 Gew.-% $CO_2$ heißt hierbei 20 Gew.-% bis 100 Gew.-%, entsprechendes gilt für wenigstens 50 Gew.-% bzw. wenigstens 80 Gew.-%.

Geeignete Polycarbonate sind alle thermoplastischen und aliphatischen Polycarbonate mit Molekulargewichten, Lösungsviskositäten, Verteilungen und Einheitlichkeiten in bekannten Bereichen. Wichtig ist lediglich, daß die einzusetzenden Polycarbonate bei den verwendeten Temperaturen in Methylenchlorid löslich sind. Bevorzugte Polycarbonate sind aromatische Polycarbonate auf Basis von Diphenolen wie sie zum Beispiel in den US-PS 3 028 365, 2 999 835, 3 148 172, 3 275 601, 2 991 273, 3 271 367, 3 096 278.1, 2 970 131 und 2 999 846, in den DE-OS 1 570 703, 2 063 050, 2 063 052, 2 211 095.6, in der DE-OS 3 832 396 (Le A 26 344) und in der DE-OS 3 833 953 (Le A 26 397) beschrieben sind. Besonders bevorzugte Polycarbonate sind solche, die zu wenigstens 5 Mol-%, bezogen auf Gesamtmenge an eingesetzten Diphenolen (=100 Mol-%) Diphenole der Art 4,4'-Dihydroxydiphenyl,

2,2-Bis-(4-hydroxyphenyl)-propan
2,2-Bis-(3,5-dimethyl-4-hydroxyphenyl)-propan und
1,1-Bis-(4-hydroxyphenyl)-3,3,5-
trimethylcyclohexan
enthalten. Die Polycarbonate können Copolymere oder Homopolymere sein, es können auch Mischungen eingesetzt werden. Die Copolymere können Block- oder statistische Copolymere sein, auch Verzweigungen sind erlaubt.

Polycarbonatlösungen in Methylenchlorid in Gewichtsanteilen von 10 Gew.-% bis 40 Gew.-% fallen üblicherweise bei der Polycarbonatherstellung nach dem Zweiphasengrenzflächenverfahren an. Die erfindungsgemäß zu isolierenden Polycarbonate sind üblicherweise in derartigen Methylenchlorid-Lösungen bei den in Rede stehenden Konzentrationen erhältlich.

Andere Komponenten, die zusammen mit dem Kohlendioxid das Kohlendioxid-haltige Fluid bilden, können alle anderen Komponenten sein, die dem Polycarbonat und dem Methylenchlorid nicht schaden. Gegebenenfalls können hier schon Komponenten eingesetzt werden, die im Polycarbonat gegenüber äußeren Einflüssen (UV-, Bewitterung etc.) als Stabilisator wirken.

Als Mischorgan werden Zweistoffdüsen verwendet. Die verwendbaren Zweistoffdüsen sind bevorzugt solche, die das niedrigviskose Kohlendioxid-haltige Fluid mit dem höherviskosen Methylenchlorid-Fluid-Polycarbonat-System gut vermischen und noch eine Verweilzeit unter guten Mischbedingungen in der Düse von wenigstens 1/30tel Sekunde anbieten.

Bevorzugte Mischbedingungen werden über die Düsengeometrie sichergestellt, indem
1) die Komponenten tangential dem Mischraum der Düse zugeführt werden,
2) die Ströme derart gerichtet sind, daß ein Staustrahl-Mischeffekt erzielt wird, und
3) zusätzliche Einbauten, wie Drallgeber, im Düsenraum angebracht werden.

Das ausgefällte Polycarbonat wird zusammen mit dem Methylenchlorid und dem Kohlendioxidhaltigen Fluid in einem Behälter entspannt. Die Anordnung der Düse und des Entspannungsbehälters kann bevorzugt so gewählt werden, daß vor Ablagerung des Pulvers im Entspannungsbehälter das Pulver noch eine Flugstrecke von mindestens 1/10tel Sekunde, also beispielsweise 175 mm, zurücklegt. Das Pulver kann anschließend zu Granulat weiterverarbeitet werden. Gegebenenfalls kann man es auch noch kompaktieren.

Das Fluid wird über einem Kondensator/Verdichter-System in den Prozeß zurückgeführt. Das Fluid darf dabei bis zu 20 Gew.-%, bezogen auf das Gesamtgewicht des Fluids, Verunreinigungen an Methylenchlorid enthalten.

## Beispiele

Allgemeine Vorschrift für die Beispiele:

Es werden 700 g Polycarbonat auf Basis von Bisphenol A (Makrolon 2805) mit einer relativen Viskosität, gemessen für 5 g Polymer auf 1 000 g Methylenchlorid bei 25 °C, 1,28 in 4 300 g Methylenchlorid gelöst. Die Polymerlösung befindet sich in einem 50 Liter-Autoklvaen bei 50 °C, in den Kohlendioxid solange unter intensivem Rühren eingeleitet wird, bis ein vorgegebener Vordruck eingestellt ist (Vorsättigung gemäß Punkt (b)). Anschließend wird die Lösung unter Nachführung von Kohlendioxid in einer konischen Mischdüse mit Drallgeber und zwei Zuführungen für weiteres Kohlendioxid bzw. diese Polymerlösung zusammengebracht (gemäß Punkt (c)). Die Zulaufgeschwindigkeit der Polymerlösung und des Kohlendioxids in der Düse wird eingestellt (entsprechend Punkt (d)). Hinter der Düse befindet sich ein 100 Liter-Entspannungsbehälter, in dem das ausfallende Polycarbonat zusammen mit dem Methylenchlorid und dem Kohlendioxid verwirbelt wird. Dort werden im Minuten-Abstand während der Destraktion Proben entnommen und analysiert. Als Verfahrensparameter werden nachfolgend variiert:
- Vordruck im Vorratsbehälter
- Zulaufgeschwindigkeit der Polymerlösung
- Zulaufgeschwindigkeit des Kohlendioxids und Menge
- Druck des Kohlendioxids an der Düse.

Analysiert werden der Staudruck an der Düse, Restmethylenchloridgehalt, Morphologie und Schüttdichte des Pulvers.

## Beispiel 1

Der Vordruck, d.h. der Druck in Stufe (b) ist 20 bar
Zulaufgeschwindigkeit 17,6 ml/min
Menge $CO_2$ in Düse - bezogen auf Gesamtmenge Polymerlösung: 500 % Kohlendioxid-Zuführung unter Druck von 130 bar, Temperatur 110 °C.

Ergebnis: Düsenstaudruck 90 bar, Restmethylenchloridgehalt der Proben durchweg unter 1 %, stets vollständig amorphes Pulver (charakterisiert durch eine Differential-Scanning-Calorimetry), Schüttdichte 0,10 g/cm³.

## Beispiel 2

Der Vordruck, d.h. der Druck in Stufe (b) ist 30 bar
Zulaufgeschwindigkeit der Polymerlösung 31,4 ml/min
Menge $CO_2$ in Düse 19,5 kg/Stunde
Temperatur $CO_2$ vor Düse: 105 °C

Temperatur der PC-Lösung: 25°C vor der Düse
Der Entspannungsbehälter wurde auf 70°C vorgeheizt und so temperiert. Druck des $CO_2$ vor der Düse: 90 bar

Ergebnis: Düsenstaudruck 85 bar, Schüttdichte 0,07 g/cm$^3$, feinkörniges, amorphes Pulver mit Restlösungsmittelgehalt unter 1 %. Das Pulver war sehr leicht rieselfähig, verbackte und verklebte nicht.

Vergleichsversuch

Ohne Vordruck - ansonsten wie in Beispiel 1: Der Versuch mußte nach einigen Minuten abgebrochen werden, da die Düse verstopfte. Das Pulver hatte eine Schüttdichte von 0,015 g/ccm und war restlösungsmittelarm (<2 %).

**Patentansprüche**

1. Kontinuierliches Verfahren zur Isolierung von Polycarbonaten aus Methylenchlorid bei Temperaturen zwischen 30 und 80°C als Pulver mit Restlösungsmittelgehalten unter 5 Gew.-%, dadurch gekennzeichnet, daß man
    a) ausgehend von einer Polycarbonat-Methylenchlorid-Lösung, die 10 bis 40 Gew.-% Polycarboant, bezogen auf das Gesamtgewicht der Polycarbonat-Lösung, enthält,
    b) zunächst Kohlendioxid-haltiges Fluid, so einmischt, daß das System Polycarbonat-Methylenchlorid-Kohlendioxid noch nicht geliert, üblicherweise bei Drücken zwischen 10 und 50 bar und Temperaturen zwischen 30 und 50°C, so daß 10 bis 12 % $CO_2$ gelöst sind,
    c) anschließend die unter Druck stehende Lösung, die Polycarbonat, Methylenchlorid und Kohlendioxid-haltiges Fluid enthält, in einer Zweistoffdüse mit weiterem Kohlendioxidhaltigen Fluid unter einem Druck zwischen 50 und 300 bar, bei Temperaturen zwischen 40 und 150°C, zusammenbringt, wobei das Massenverhältnis $CO_2$/Lösung zwischen 1,0 und 15 liegt,
    d) wobei zwischen der Maßnahme b) und c) eine Verweilzeit von mindestens 0,1 Sekunden realisiert wird und
    e) die Dosierung von Kohlendioxidhaltigem Fluid generell so gesteuert wird, daß in der Maßnahme b) Polycarbonat noch nicht geliert und in der Maßnahme c) das System Polycarbonat-Methylenchlorid-Kohlendioxid oberhalb des Gelierbereiches ist und Polycarbonat rasch als Festpartikel aus dem Dreiphasensystem ausfällt,
    f) wobei gegebenenfalls Methylenchlorid und Kohlendioxid-Gase in einem Verdichter/Kondensatorsystem im wesentlichen getrennt und Kohlendioxid in den Destraktionsprozeß zurückgeführt wird.